# EUROPÄISCHE PATENTSCHRIFT

(11) **EP 1 223 188 B1**
(45) Veröffentlichungstag und Bekanntmachung des Hinweises auf die Patenterteilung: **23.02.2005**
(21) Anmeldenummer: 01100440.5
(22) Anmeldetag: 08.01.2001
(51) Int. Cl.: C08J 7/04, E06B 3/263

(54) **Verfahren zur Herstellung von pulverlackierten Kunststoffprofilen**
Process for preparing powder coated plastic profiles
Procédé pour préparer un profilé en matière plastique au revêtement par poudre

(43) Veröffentlichungstag der Anmeldung: 17.07.2002
(73) Patentinhaber: Technoform Caprano und Brunnhofer GmbH & Co. KG, 34119 Kassel (DE)
(72) Erfinder: Brunnhofer, Erwin, 34277 Fuldabrück (DE)
(74) Vertreter: Rohmann, Michael, Dr.

(56) Entgegenhaltungen:
- EP-A- 0 638 368
- US-A- 5 703 139
- DATABASE WPI Week 0625 Derwent Publications Ltd., London, GB; AN 1984-192374 XP002171400 & JP 59 109525 A (DAINIPPON PRINTING CO LTD), 25. Juni 1984 (1984-06-25)

## Beschreibung

Die Erfindung betrifft ein Verfahren zur Herstellung von zur Pulverlackierung vorgesehener Kunststoffprofile, insbesondere von Isolierstegen aus Kunststoff für Aluminium-Kunststoff-Verbundprofile. - Die vorgenannten Aluminium-Kunststoff-Verbundprofile werden insbesondere für Fenster, Türen oder Fassadenelemente eingesetzt. Die Isolierstege aus Kunststoff werden üblicherweise im Rahmen eines Pulverlackierverfahrens elektrostatisch beschichtet. Dazu werden feinste feste Lackpartikel elektrisch mit Spannungen von 40.000 bis 120.000 Volt aufgeladen und zweckmäßigerweise mittels Druckluft auf das kalte Verbundprofil aufgebracht. Je nach Dauer dieses Vorgangs baut sich eine bestimmte Schichtstärke des Lackes auf. Im Anschluss daran folgt in der Regel ein Einbrennvorgang, bei dem Temperaturen um 200°C oder über 200°C erzeugt werden.

Die nach den aus dem Stand der Technik bekannten Verfahren der eingangs genannten Art hergestellten Verbundprofile zeichnen sich durch eine Reihe von Nachteilen aus. Zunächst wird der Lackauftrag bzw. das Ausmaß der Lackbedeckung durch die Stärke des elektrischen Feldes bei der Pulverlackierung bestimmt. Die Isolierstege aus Kunststoff weisen aber in der Regel eine schlechte elektrische Leitfähigkeit auf und tragen somit zur Ausbildung des elektrischen Feldes nicht bei. Deshalb lässt die Lackbedeckung dieser Isolierstege nach Durchführung der Pulverlackierung oft zu wünschen übrig. Man hat versucht, die Leitfähigkeit der Isolierstege aus Kunststoff durch Einarbeitung von Leitruß oder von metallischen Elementen (EP 0 667 625 A1, DE 33 22 016 A1) zu erhöhen. Bei Einarbeitung von Leitruß werden aber die mechanischen Eigenschaften der Isolierstege erheblich beeinträchtigt. Bei Einarbeitung der metallischen Elemente, beispielsweise von metallischen Fasern, erhöht sich in unerwünschter Weise auch die thermische Leitfähigkeit der Isolierstege. Deshalb haben sich die genannten Methoden nicht bewährt. Es ist weiterhin bekannt, zur Erhöhung der Leitfähigkeit der Isolierstege lösungsmittelhaltige leitfähige Primer vor der Pulverlackierung auf die Isolierstege aufzubringen. Die Leitfähigkeit des Primers kann dabei beispielsweise durch Rußpartikel oder Metallpartikel erhöht werden. Auch dabei wird jedoch in nachteilhafter Weise gleichzeitig die thermische Leitfähigkeit der Isolierstege gesteigert, was insbesondere beim Einsatz für Fenster, Türen und Fassadenelemente natürlich unerwünscht ist.

Auch die Lackhaftung des Pulverlackes auf den Isolierstegen aus Kunststoff, die nach den aus dem Stand der Technik bekannten Verfahren hergestellt werden, lässt erheblich zu wünschen übrig. Diese Lackhaftung wird von der Oberflächenspannung und der Rauigkeit der Isolierstege beeinflusst. Zur Verbesserung der Haftung des Pulverlackes sind in der Praxis verschiedene Methoden ausprobiert worden. Die Isolierstege aus Kunststoff wurden zur Verringerung der Oberflächenspannung einer Beflammung, einer CoronaBehandlung, einer Plasma-Behandlung oder einer Fluorierung unterzogen. Diese Methoden haben sich jedoch nicht bewährt. Zur Aufrauung der Oberfläche der Isolierstege wurde auch ein Sandstrahlen der Isolierstege vorgenommen, um die Lackhaftung zu verbessern. Dabei wurden jedoch in nachteilhafter Weise die an den Isolierstegen anhaftenden Reste des Strahlguts in die Vorbehandlungsbäder eingebracht, die der Pulverlackierung vorgeschaltet sind. Man hat auch versucht, die Haftung des Lackes durch das Aufbringen eines lösungsmittelhaltigen Haftprimers zu verbessern. Als Lösungsmittel werden dabei insbesondere Alkohole und aromatische Kohlenwasserstoffe sowie Wasser eingesetzt. Die Lösungsmittel werden aber bei der Aushärtung des Primers nur teilweise an die Außenumgebung abgegeben. Der größere Teil des Lösungsmittels gelangt in den Isoliersteg und erhöht die nachfolgend beschriebene unerwünschte Tendenz zur Blasenbildung.

Die aus der Praxis bekannten Verfahren der eingangs genannten Art zeichnen sich noch durch einen weiteren beachtlichen Nachteil aus. Kunststoffprofile bzw. Isolierstege aus Kunststoff, insbesondere aus Polyamid, sind in der Lage Feuchtigkeit aufzunehmen. Bei längerer Lagerzeit steigt in der Regel zwangsläufig der Feuchtigkeitsgehalt. Die Feuchtigkeit in den Isolierstegen erhöht zwar die elektrische Leitfähigkeit, jedoch ist diese Leitfähigkeit naturgemäß nicht reproduzierbar einstellbar. Wenn im Anschluss an die Pulverlackierung das Einbrennen des Pulverlackes durchgeführt wird, bewirken die hohen Temperaturen ein Austreiben der Feuchtigkeit aus dem Isoliersteg. Dies führt zu einer sehr unerwünschten Blasenbildung im Decklack.

Aus EP 0 638 368 A ist ein Verfahren zum Pulverlackieren von Verbundprofilen bekannt. Bei diesem Verfahren erfolgt die Pulverlackierung in herkömmlicher Weise durch elektrostatisches Aufbringen eines geeigneten Lackpulvers. lm Anschluss daran wird das mit Pulver beschichtete Verbundprofil höheren Temperaturen ausgesetzt. Zur Erhöhung der elektrostatischen Haftung des Pulverfackes auf den Außenseiten des lsoliersteges wird nach diesem bekannten Verfahren vorher eine dünne, elektrisch leitende Beschichtung aufgebracht. Als elektrisch leitfähige Beschichtung kann ein Primer aus Polyester-, Epoxyd-, Polyisozyanat-Harzeu oder Nitrozellulose verwendet werden, dem zur Erhöhung der Leitfähigkeit Leitrube und/oder Metallpulver beigemischt ist.

Das Dokument AN 1984-192374 (Derwent/WPI Zusammenfassung von JP-59.109525 A) betrifft ganz allgemein das Aufbringen eines UV-härtenden Primers auf einer Acrylatoberfläche bzw. Acrylglasplatte. Der UV-härtende Primer enthält Hexandioldiacrylat und Benzophenon. Eine Pulverlackierung eines Kunststoffprofils wird aber bei diesem Verfahren nicht durchgeführt.

Demgegenüber liegt der Erfindung das technische Problem zugrunde, ein Verfahren der eingangs genannten Art anzugeben, bei dem die vorstehend geschilderten Nachteile vermieden werden und mit dem vor allem die Blasenbildung verhindert werden kann.

Zur Lösung dieses technischen Problems lehrt die Erfindung ein Verfahren zur Herstellung von zur Pulverlackierung vorgesehenen Kunststoffprofilen, insbesondere von Isolierstegen für Aluminium-Kunststoff-Verbundprofile,
wobei auf ein Kunststoffprofil ein UV-härtender Primer aufgebracht wird, der zumindest 40 Gew.-% eines Acrylharzes enthält
und wobei nach Aushärtung des Primers die Pulverlackierung des Kunststoffprofils durchgeführt wird. - Die Aluminium-Kunststoff-Verbundprofile werden insbesondere für Fenster, Türen und Fassadenelemente eingesetzt.

UV-härtend meint im Rahmen der Erfindung die Härtung unter Einfluss von UV-Licht. Pulverlackierung meint im Rahmen der Erfindung eine elektrostatische Pulverbeschichtung (EPS) bzw. eine elektrostatische Beschichtung im Pulverlackierverfahren. Dabei werden zweckmäßigerweise feinste feste Lackpartikel elektrisch mit Spannungen von 40.000 bis 120.000 Volt aufgeladen. Die Lackpartikel werden dann auf das zu beschichtende Werkstück, im vorliegenden Fall das Kunststoffprofil, geschleudert. Zweckmäßigerweise erfolgt die Beschleunigung der feinen Lackpartikel mit Hilfe von Druckluft.

Das Kunststoffprofil wird vorzugsweise durch Extrusion hergestellt. Im Anschluss an die Extrusion und zweckmäßigerweise im Anschluss an eine Kühlung des Kunststoffprofils findet die Beschichtung mit dem UV-härtenden Primer statt. Diese Beschichtung wird bevorzugt mit Hilfe von Spritzdüsen vorgenommen. Nach der Beschichtung findet die Härtung des Primers mit Hilfe von UV-Strahlung statt.

Im Anschluss an die Beschichtung mit dem UV-härtenden Primer und nach Aushärtung dieses Primers wird die Pulverlackierung durchgeführt. Es liegt dabei im Rahmen der Erfindung, dass das Kunststoffprofil zunächst mit Aluminiumprofilen verbunden wird. Vor der Pulverlackierung wird das Verbundprofil vorzugsweise in zumindest ein Vorbehandlungsbad eingebracht. Die Pulverlackierung bzw. Pulverbeschichtung findet zweckmäßigerweise mit einem Lack statt, der kein Triglycidylisocyanurat enthält. Es liegt im Rahmen der Erfindung, dass im Anschluss an die Pulverlackierung des Kunststoffprofils bzw. des Verbundprofils das Einbrennen des Pulverlackes stattfindet. Dabei wird zweckmäßigerweise bei hohen Temperaturen um 200°C oder über 200°C gearbeitet.

Es liegt im Rahmen der Erfindung, dass mit einem Kunststoffprofil gearbeitet wird, das aus einem bei einer Temperatur von 200°C temperaturbeständigen Kunststoff besteht. Zweckmäßigerweise ist der vorgenannte Kunststoff auch bei Temperaturen oberhalb von 200°C, beispielsweise bei einer Temperatur von 210°C temperaturbeständig. - Vorzugsweise wird im Rahmen des erfindungsgemäßen Verfahrens mit einem Kunststoffprofil gearbeitet, das aus Polyamid und/oder Polyethylenterephthalat und/oder aus Blends der vorgenannten Kunststoffe besteht. Nach einer Ausführungsform der Erfindung besteht das Kunststoffprofil aus Polyamid 66. Zweckmäßigerweise wird mit einem faserverstärkten Kunststoffprofil, vorzugsweiseglasfaserverstärkten Kunststoffprofil, gearbeitet. Eine Ausführungsform der Erfindung ist dadurch gekennzeichnet, dass das Kunststoffprofil aus Polyamid 66 besteht, welches einen Glasfaseranteil von 25 Gew.-% hat.

Es liegt im Rahmen der Erfindung, dass der UV-härtende Primer lösungsmittelfrei oder im Wesentlichen lösungsmittelfrei ist. Der Lösungsmittelgehalt des Primers ist vorzugsweise geringer als 1 Gew.-%. - Zweckmäßigerweise besitzt der UV-härtende Primer einen Festkörperanteil von mehr als 95 Gew.-%, bevorzugt von mehr als 97 Gew.-%, sehr bevorzugt von mehr als 99 Gew.-%.

Nach sehr bevorzugter Ausführungsform der Erfindung wird ein UV-härtender Primer eingesetzt, der zumindest 50 Gew.-% eines Acrylharzes enthält. Zweckmäßigerweise enthält der UV-härtende Primer zumindest 55 Gew.-% eines Acrylharzes, bevorzugt 55 bis 85 Gew.-% eines Acrylharzes, sehr bevorzugt 60 bis 80 Gew.-% eines Acrylharzes. Bei dem Acrylharz handelt es sich insbesondere um ein Acrylat. Vorzugsweise wird als UV-härtender Primer ein Diacrylat eingesetzt. Nach einer sehr bevorzugten Ausführungsform der Erfindung ist das Acrylharz in dem UV-härtenden Primer 1,6-Hexandioldiacrylat.

Es liegt im Rahmen der Erfindung, dass der UV-härtende Primer zumindest ein Keton enthält. Gemäß einer Ausführungsform handelt es sich dabei um ein Propanon. Nach sehr bevorzugter Ausführungsform der Erfindung enthält der UV-härtende Primer 2-Hydroxy-2-methyl-1-phenylpropanon-1.Zweckmäßigerweise enthält der UV-härtende Primer 2 bis 12 Gew.-%, vorzugsweise 2,5 bis 10 Gew.-%, sehr bevorzugt 4 bis 7 Gew.-% zumindest eines Ketons. - Es liegt im Rahmen der Erfindung, dass der UV-härtende Primer ein phosphorsäuremodifiziertes Polymer enthält. Zweckmäßigerweise sind in dem UV-härtenden Primer 2 bis 12 Gew.-%, vorzugsweise 3,5 bis 10 Gew.-% des phosphorsäure-modifizierten Polymers enthalten. Nach sehr bevorzugter Ausführungsform der Erfindung enthält der UV-härtende Primer 4 bis 7 Gew.-% des phosphorsäure-modifizierten Polymers.

Nach einer sehr bevorzugten Ausführungsform, der im Rahmen der Erfindung ganz besondere Bedeutung zukommt, wird ein elektrisch leitfähiger UV-härtender Primer auf das Kunststoffprofil aufgebracht. Zweckmäßigerweise wird die elektrische Leitfähigkeit des UV-härtenden Primers so eingestellt, dass bei dem aufgebrachten Primer der elektrische Widerstand (Oberflächenwiderstand) kleiner als 10⁹ Ohm ist. - Vorzugsweise wird ein UV-härtender Primer eingesetzt, der zumindest einen intrinsisch leitfähigen Kunststoff enthält. Es liegt im Rahmen der Erfindung, dass es sich bei dem intrinsisch leitfähigen Kunststoff um zumindest ein Polythiophen und/oder um zumindest ein Polyanilin handelt.

Nach sehr bevorzugter Ausführungsform der Erfindung wird der UV-härtende Primer in einer Schichtdicke von 1 bis 30 µm, vorzugsweise von 1 bis 25 µm, bevorzugt von 5 bis 25 µm, sehr bevorzugt von 5 bis 20 µm aufgetragen.

Der Erfindung liegt die Erkenntnis zugrunde, dass mit dem erfindungsgemäßen Verfahren ein Kunststoffprofil, insbesondere ein Isoliersteg hergestellt werden kann, der auf einfache und sehr funktionssichere Weise im Rahmen der Pulverlackierung beschichtet werden kann. Wenn das Kunststoffprofil mit dem erfindungsgemäßen UV-härtenden Primer vorbeschichtet wurde, weist der Pulverlack eine optimale Haftung an dem Kunststoffprofil auf. Wenn ein erfindungsgemäßes Kunststoffprofil nach der Pulverlackierung bei höheren Temperaturen behandelt wird, bleibt überraschenderweise eine störende Blasenbildung in dem Pulverlack bzw. Decklack völlig aus. Insoweit zeichnet sich das erfindungsgemäße Verfahren gegenüber dem Stand der Technik durch beachtliche Vorteile aus.

Gegenstand der Erfindung ist auch ein Kunststoffprofil, insbesondere ein Isoliersteg für Aluminium-Kunststoff-Verbundprofile, der nach dem erfindungsgemäßen Verfahren hergestellt wurde.

Ein bevorzugtes Ausführungsbeispiel ist dadurch gekennzeichnet, dass der UV-härtende Primer 50 bis 95 Gew.-% 1,6-Hexandioldiacrylat, vorzugsweise 60 bis 80 Gew.-% 1,6-Hexandioldiacrylat enthält sowie 2,5 bis 10 Gew.-%, vorzugsweise 4 bis 7 Gew.-% 2-Hydroxy-2-methyl-1-phenylpropanon-1 enthält. Nach einer Ausführungsform dieses Ausführungsbeispiels kann der UV-härtende Primer zusätzlich 3,5 bis 10 Gew.-%, vorzugsweise 4 bis 7 Gew.-% eines phosphorsäure-modifizierten Polymers enthalten.

Im Rahmen von Vergleichsversuchen wurden Isolierstege aus Polyamid 66, die 25 Gew.-% Glasfasern enthielten, unter Umgebungsbedingungen drei Monate lang gelagert und dann weiterverarbeitet. Die Oberflächenenergie direkt nach der Behandlung betrug 35 mN/m. Die Isolierstege wurden mit Aluminium-Halbschalen verbunden, durch Vorbehandlungsbäder geleitet und mit Pulverlack beschichtet, der von Triglycidylisocyanurat frei war. Anschließend fand bei 205°C ein 20 Minuten langes Einbrennlackieren statt. Danach wurde die Lackbeschaffenheit untersucht. Dabei wurde festgestellt, dass das Ausmaß der Lackbedeckung gerade noch akzeptabel war. Die Lackhaftung ließ jedoch zu wünschen übrig. Beim Einbrennlackieren trat eine deutliche und unerwünschte Blasenbildung auf. - Weiterhin wurden Isolierstege der vorstehend genannten Art mit einem lösungsmittelhaltigen leitfähigen Haftprimer behandelt, der ca. 75 Gew.-% Lösungsmittel in Form von Toluol und Xylol enthielt. Die Isolierstege wiesen direkt nach der Behandlung eine Oberflächenenergie von 48 bis 56 mN/m auf. Anschließend wurden diese Isolierstege drei Monate lang unter Umgebungsbedingungen gelagert. Danach wurden die Isolierstege ebenso behandelt, wie vorstehend beschrieben. Nach dem Einbrennlackieren wurde die Lackbeschaffenheit untersucht. Das Ausmaß der Lackbedeckung und die Lackhaftung waren zufriedenstellend. Allerdings trat auch hier eine unerwünschte Blasenbildung auf. - Zum Vergleich wurden Isolierstege der vorstehend genannten Art mit einem erfindungsgemäßen UV-härtenden Primer behandelt, so dass sie direkt nach der Behandlung eine Oberflächenenergie von 54 mN/m aufwiesen. Dann wurden diese Isolierstege der Pulverlackierung und einem Einbrennverfahren unterzogen. Bei Untersuchung der Lackbeschaffenheit wurde festgestellt, dass sowohl die Lackbedeckung als auch die Lackhaftung allen Anforderungen genügten. Überraschenderweise war eine Blasenbildung nicht zu beobachten. Weiterhin wurden Isolierstege der vorstehend beschriebenen Art mit einem erfindungsgemäßen UV-härtenden leitfähigen Primer behandelt, so dass sie direkt nach der Behandlung eine Oberflächenenergie von 54 mN/m aufwiesen. Auch diese Isolierstege wurden der Pulverlackierung und dem Einbrennvorgang unterzogen. Die Lackbedeckung bei diesen Isolierstegen war noch ausgeprägter, als in dem letztgenannten Vergleichsbeispiel. Die Lackhaftung war optimal und auch hier war überraschenderweise eine Blasenbildung nicht zu beobachten.

## Patentansprüche

1. Verfahren zur Herstellung von pulverlackierten Kunststoffprofilen, insbesondere von Isolierstegen für Aluminium-Kunststoff-Verbundprofile,
wobei auf ein Kunststoffprofil ein UV-härtender Primer aufgebracht wird, der zumindest 40 Gew.-% eines Acrylharzes enthält
und wobei nach Aushärtung des Primers die Pulverlackierung des Kunststoffprofils durchgeführt wird.

2. Verfahren nach Anspruch 1, wobei mit einem Kunststoffprofil gearbeitet wird, das aus einem bei einer Temperatur von 200°C temperaturbeständigen Kunststoff besteht.

3. Verfahren nach einem der Ansprüche 1 oder 2, wobei mit einem Kunststoffprofil gearbeitet wird, das aus Polyamid und/oder Polyethylenterephthalat und/oder aus Blends der vorgenannten Kunststoffe besteht.

4. Verfahren nach einem der Ansprüche 1 bis 3, wobei ein UV-härtender Primer eingesetzt wird, der zumindest 50 Gew.-% zumindest eines Acrylharzes enthält.

5. Verfahren nach Anspruch 4, wobei das Acrylharz 1,6-Hexandioldiacrylat ist.

6. Verfahren nach einem der Ansprüche 1 bis 5, wobei der UV-härtende Primer zumindest ein Keton enthält.

7. Verfahren nach einem der Ansprüche 1 bis 6, wobei ein elektrisch leitfähiger UV-härtender Primer aufgebracht wird.

8. Verfahren nach Anspruch 7, wobei ein UV-härtender Primer eingesetzt wird, der zumindest einen intrinsisch leitfähigen Kunststoff enthält.

9. Verfahren nach einem der Ansprüche 1 bis 8, wobei der UV-härtende Primer in einer Schichtdicke von 1 bis 30 µm, vorzugsweise von 1 bis 25 µm, aufgetragen wird.

## Claims

1. A method for manufacturing powder-coated synthetic profiles, in particular insulating webs for synthetic aluminium compound profiles, wherein a UV-hardening primer is applied to a synthetic profile, containing at least 40 % by weight of an acrylic resin and wherein the powder coating of the synthetic profile is carried out after the primer hardens.

2. The method as claimed in Claim 1, wherein a synthetic profile is processed, comprising a synthetic material temperature-resistant at a temperature of 240 °C.

3. The method as claimed in any one of Claims 1 or 2, wherein a synthetic profile is processed, comprising polyamide and/or polyethylene terephthalate and/or blends of the above synthetics.

4. The method as claimed in any one of Claims 1 to 3, wherein a UV- hardening primer is used, containing at least 50 % by weight of at least an acrylic resin.

5. The method as claimed in Claim 4, wherein the acrylic resin is 1,6-hexane dioldiacrylate.

6. The method as claimed in any one of Claims 1 to 5, wherein the UV- hardening primer contains at least one ketone.

7. The method as claimed in any one of Claims 1 to 6, wherein an electrically conductive UV-hardening primer is applied.

8. The method as claimed in Claim 7, wherein a UV-hardening primer is used, which contains at least an intrinsically conductive synthetic.

9. The method as claimed in any one of Claims 1 to 8, wherein the UV- hardening primer is applied in a layer thickness of 1 to 34 µm, preferably 1 to 25 µm.

## Revendications

1. Procédé de fabrication de profilés en plastique revêtus par pulvérisation, notamment de nervures d'isolation pour des profilés composite aluminium-plastique,
dans lequel un primaire durcissant aux UV, qui contient au moins 40 % du poids d'une résine acrylique, est appliqué sur un profilé en plastique
et dans lequel, après le durcissement du primaire, le revêtement par pulvérisation du profilé en plastique est effectué.

2. Procédé selon la revendication 1, dans lequel un profilé en plastique est travaillé, lequel est constitué d'un plastique résistant à la chaleur à une température de 200 °C.

3. Procédé selon une des revendications 1 ou 2, dans lequel un profilé en plastique est -travaillé, lequel est constitué de polyamide et/ou de polyéthylène téréphtalate et/ou de mélanges des plastiques précédemment mentionnés.

4. Procédé selon une des revendications 1 à 3, dans lequel un primaire durcissant aux UV est utilisé, lequel contient au moins 50 % du poids d'au moins une résine acrylique.

5. Procédé selon la revendication 4, dans lequel la résine acrylique est 1,6 - diacrylate d'hexanediol.

6. Procédé selon une des revendications 1 à 5, dans lequel le primaire durcissant aux UV contient au moins une cétone.

7. Procédé selon une des revendications 1 à 6, dans lequel un primaire durcissant aux UV, conducteur électriquement est appliqué.

8. Procédé selon la revendication 7, dans lequel un primaire durcissant aux UV est utilisé, lequel contient au moins un plastique intrinsèquement conducteur.

9. Procédé selon une des revendications 1 à 8, dans lequel le primaire durcissant aux UV est appliqué à une épaisseur de couche de 1 à 30 µm, de préférence de 1 à 25 µm.
